# EUROPEAN PATENT SPECIFICATION

(11) **EP 1 047 494 B1**
(45) Date of publication and mention of the grant of the patent: **13.11.2002**
(21) Application number: 99902532.3
(22) Date of filing: 12.01.1999
(51) Int. Cl.: B01J 13/00

(54) **METHOD OF PRODUCING AEROGELS AND APPARATUS FOR CARRYING OUT THE METHOD**
VERFAHREN ZUM HERSTELLEN VON AEROGEL UND VORRICHTUNG DAFÜR
PROCEDE DE PRODUCTION D'AEROGELS ET APPAREIL DE REALISATION DE CE PROCEDE

(30) Priority: 13.01.1998 DE 19800875
(43) Date of publication of application: 02.11.2000
(73) Proprietor: CABOT CORPORATION, Boston, Massachusetts 02210-2019 (US)
(72) Inventor: SIEVERS, Werner, D-65929 Frankfurt am Main (DE); FRÜNDT, Jens, D-65929 Frankfurt am Main (DE); HARTEL, Johannes, D-65812 Bad Soden (DE); HERMANN, Kurt, D-65510 Idstein (DE); SCHWERTFEGER, Fritz, D-65029 Frankfurt am Main (DE); YANOVER, Deborah, Lafayette Hill, PA 19444 (US)
(74) Representative: Luderschmidt, Schüler & Partner GbR
(86) International application number: EP9900125
(87) International publication number: WO99036170

(56) References cited:
- WO-A-97/32662

## Description

The invention relates to a method of producing aerogels and to an apparatus for carrying out the method.

Lyogels are gels which contain a fluid, the dispersing agent. In the particular case where the gel fluid is water, they are also referred to as hydrogels. In the present Application, the concept of lyogels also includes hydrogels.

Aerogels in the wider sense, i.e. in the sense of "gel with air as the dispersing agent", are produced by drying a suitable gel. In this sense, the term 'aerogel' includes aerogels in the narrower sense, xerogels and cryogels. In this respect, a dried gel is termed an aerogel in the narrower sense, when the fluid of the gel is eliminated at temperatures above the critical temperature and starting from pressures above the critical pressure. On the other hand, if the fluid in the gel is eliminated sub-critically, for example with the formation of a liquid-vapour interphase, then the resulting gel is often referred to as a xerogel.

Unless the text mentions an explicit qualification, the present Application refers to aerogels in the wider sense.

For solid substances, aerogels have a very low density and a high porosity. Therefore and on account of the very small pore size, aerogels, particularly those with porosities above 60% and densities below 0.6 g/cu.cm, display extremely low thermal conductivity and are therefore used as heat insulating materials, as described for example in EP 0 171 722A.

By virtue of the low density, however, aerogels also display minimal mechanical stability, particularly in respect of shearing loadings and abrasion.

For industrial applications, aerogels are predominantly used as a granulate. For application, what is essential is that the aerogel granulate to be used should consist of particles of a suitable shape, preferably a spherical shape, and size distribution.

The steps absolutely necessary for the production of aerogels are the production of a suitable gel and the drying. In principle, a distinction must be made between super-critical and sub-critical drying processes, as described above. As a rule,. following the actual production of the gel, further procedural stages are carried out prior to drying.

For industrial application, aerogels are used almost exclusively in the form of a granulate which is more easily produced and which is on the other hand more easily used. The procedural stages following actual gel production are then carried out on gel granulate in bulk or heaps with typical grain diameters of 0.1 mm to 20 mm and which are typically readily permeable to gases and fluids.

In the case of super-critical drying, disclosed for example in WO 95/06617 A for the production of SiO₂ aerogels from SiO₂ hydrogels obtained from water glass and by super-critical drying, at least one solvent exchange is mostly needed in order to exchange the original gel fluid, e.g. water in the case mentioned, for a fluid, e.g. methanol or CO₂, suitable for super-critical drying. The super-critical drying itself must then be carried out in autoclaves on account of the considerable pressures in the super-critical range.

For sub-critical drying in an aerogel, by virtue of the capillary forces which occur in sub-critical drying and the shrinkage involved, not all lyogels are suitable. Upon drying, the gel shrinks considerably if the fluid meniscus migrates into the interior of the gel and then, as from a certain point in the drying, springs back more or less completely to its original form. And so, according to the qualities of the inner gel surface, a certain minimum stability of the gel network is needed, a modification of the inner gel surface often being needed in order to prevent a reaction on the part of adjacent pore walls in the shrunk state and a collapse of the gel which would result. Corresponding processes in which the inner surface of an SiO₂ lyogel is organically modified and the resulting gel is sub-critically dried to an aerogel, are disclosed for instance in US 5 565 142 A, DE 43 42 548 A and DE 196 48 798 A. Gases unsuitable for sub-critical drying collapse during sub-critical drying, with a loss of their porous structure and therefore they no longer have the favourable qualities of aerogels. Therefore, along with the drying stage, at least one stage is typically required for chemical modification.

Lyogels for xerogels which are used in the area of catalysis are, prior to drying, typically subjected to stages to modify the surface, which means additional procedural steps.

The carrying out of this method on an industrial scale does present problems, also on account of the low mechanical stability of the gels.

In principle, the simplest are batch processes. In this respect, there are substantially two alternatives:

On the one hand, the gel can, for different procedural stages, be transferred to various respectively suitable appliances, e.g. exchange devices, reaction containers, autoclaves, etc. Transport of the gels from one appliance to the next must take place in a very protective and therefore slow and/or expensive fashion as otherwise undesirable grain fracture can easily occur. Furthermore, large appliances which are favourable from the investment point of view, give rise to relatively long charging times and, in consequence, also considerable differences in dwell time which can have a substantial effect on the gel quality.

A further alternative is to conduct all reaction stages in one appliance which then certainly would need to embody fairly complicated piping so that the various fluids and gases can be fed in and discharged.

General drawbacks of the alternatives described reside in the fact that on grounds of cost the fewest and largest appliances ought to be used and yet many appliances are of small maximum size in relation to the quantity to be produced, which results in very high production costs. On the other hand, large-sized appliances can also readily lead to maldistribution effects and wide-ranging dwell times. For super-critical drying, it is harder to imagine anything other than batch processing.

In the case of sub-critical drying, continuous processes are indeed desirable but considerable problems arise out of the typically necessary use of greatly corrosive chemicals. The materials of many moving parts of for instance belts for surface modification and the mechanism which moves the belts must be resistant to the corrosive materials. The construction and cost problems which result and which are occasioned by the typically necessary prolonged dwell times are substantial.

Therefore, the object on which the present invention was to find methods of producing aerogels but which are simple and which, at minimal cost, allow the production of even large quantities of aerogels.

A further object of the invention was to provide an expedient apparatus for carrying out the method.

The problem is resolved by a method of producing aerogels and which is characterised in that, following gel formation, the lyogel is transferred to a movable container for at least two further procedural stages, the said container comprising inlets and outlets and in that, for these procedural stages, the container is moved to the corresponding stations for the intake and discharge of substances, at which stations they are connection to feed and discharge means and in that the procedural steps are carried out there. The container is sealed in a gastight fashion.

It is also possible for a plurality of procedural steps to be carried out at one station

By using a plurality of containers which are connected to the stations one after another, it is possible while simultaneously utilising all the stations to produce aerogel semi-continuously.

The method according to the invention offers several advantages over a batch process: since, on the one hand, the gel has to be less frequently transferred between various appliances, the gel is treated very gently during the stages of the process so that there is hardly any grain fracture. On the other hand, the above-mentioned complicated piping is avoided.

Since, furthermore, the exchange between various stations takes place relatively quickly, smaller containers can be used which results in closer dwell time distributions and fewer problems in connection with the even distribution of solvents and/or liquid reactants.

Furthermore, the method can within certain limits be more easily scaled, since only the size of the containers have to be altered.

In comparison with the conduct of a continuous process requiring considerable outlay on the design and construction of belts, the method employed here has the advantage that the gel and all the reactants are separate from the movable parts, resulting in substantially simpler appliances and thus lower investment costs. Furthermore, the containers are sealed in a gastight fashion so that the waste air problems and difficulties with leaks which occur with appliances which have moving parts and shaft bushes do not arise.

Not all the steps in the process have to be carried out in the manner according to the invention. And yet preferably all the stages of the process are preferably carried out after gel formation and in the manner according to the invention.

Preferably, the stations are disposed one after another in the same sequence as the stages of the process, so that the containers only have to travel short distances between the stations. Preferably, the last station is situated directly alongside the first station so that the containers do not need to be travelled over relatively great distances while empty.

In principle, all methods of producing aerogels are suitable to be performed in the manner according to the invention. It is particularly advantageous to apply the method to the production of aerogels of low density, i.e. a density of less than 0.3 g/cu.cm since such gels are mechanically sensitive. Preferred methods are in this case those for the production of SiO₂ aerogels on a water glass base, such as are described for super-critical drying, for example in WO 95/06617 A and for sub-critical drying for example in US 5 565 142 A, DE 43 42 548 A and DE 192 48 798 A.

There are particular advantages in methods for sub-critical drying since, according to the method, relatively many procedural steps are needed in that case.

The containers for carrying out the method according to the invention must obviously be suited to the method. For example, in terms of their walls and their inlets and outlets, they must be designed to suit the mechanical loadings which arise. This is particularly true for the case of super-critical drying in which the containers must in principle be designed as mobile autoclaves. The inside walls of the containers as well as the inlet and outlet connectors must if necessary withstand corrosive influences, which can possibly be achieved with conventional methods, e.g. by enamelling or a coating of suitable synthetic plastics. As far as the container material itself is concerned, this may be glass, steel or even synthetic plastics material.

Typical sizes of container lie in the range between 0.2 cu.m and 2 cu.m but it is also possible to use larger or smaller containers.

Preferably, there is in the container at least one means permeable to gases and fluids but not to gels, said means being provided at least at those places at which, during at least one of the process stages, gases or fluids emerge from the gel. Said means prevents particles of gel being carried out of the container by the flow through the pile. The means may just be placed into the container or may be connected to it separably or inseparably.

Preferably, such means are filter trays provided at a suitable location and taking a suitable form.

Preferably, the flow through the heat is from the top downwards. In this case, the heap or bulk material preferably lies on the filter tray.

In a particularly preferred embodiment, the means permeable to gases and fluids but not to gels consists of a bag into which the gel is filled. Preferably, the bag lies on a grate or filter screen, the openings in which are small enough to prevent any significant forcing of the bag through the holes and so the danger of damage to bag or gel.

Then, on the one hand, the gel can be more easily removed from the container but on the other, for cleaning or in the case of a blockage, the relative expensive container does not need to be taken out of the process. It is sufficient instead to exchange the comparatively inexpensive bag.

The bag must consist of a material which is sufficiently tear-resistant that the bag with gel can be handled without any problem and which is unaffected by the solvents and reactants used.

The permeability of the bag, at least of those points where fluid flows in and out, for example in the case of a bag which is open at the top, with the flow passing from the top downwards on the tray, will be markedly greater than that of the rest of the bag.

Suitable materials are woven or non-woven synthetic plastics of suitable permeability which may be manufactured for example from polyethylene, polypropylene, PTFE or PVDF. For the trays, knitted-type metal structures may also be used.

The bags can also be used for transporting the finished aerogel to the customer without the need for it to be transferred, so that it can be conveyed from production to customer in a particularly protective fashion, with a minimum of abrasion.

For greater ease of handling, the bag is along its opening at least partially connected to thickening elements which are preferably flexible, i.e. metal wires, synthetic plastics rods or tubes which are stitched or welded on.

It is particularly preferred for the thickening element to extend along the entire periphery of the opening.

It is advantageous if the thickening element also has springing properties since in this way the bag is additionally and automatically held open at the opening.

Preferably, the element is then contained in a tube formed at the top end of the bag since in this way mechanical stresses can be evenly distributed and crease formation is avoided.

Preferably, the element is formed by a sheathed and springing metal wire which is formed into a ring at its ends, for example by a tube which is pushed over it. The sheathing is intended to resist corrosion and can be made for instance from PTFE tubing.

The problem of providing an expedient apparatus for carrying out the method is resolved by an apparatus which comprises a container with a container top part and container bottom part, an encircling seal and, adapted to be placed into the container, a bag which is at least partially connected to thickening elements along the opening, and which also comprises a retaining device for the bag. Container top and bottom parts are connected along their periphery in gastight manner to corresponding parts of the retaining device, so that the container bottom part can be connected to the bottom part of the retaining device, the seal and the container top part can be connected to the upper part of the retaining device in gas-right fashion. At least one of the parts of the retaining devices has. an aperture to receive the bag and at least one part of the retaining device comprises a plurality of individual projections or an encircling bead so that the minimum distance between the projections or the bead and the other part of the retaining device is greater than the wall thickness of the bag and the rim of the bag, together with the thickening elements, is held between the projections or bead and the seal.

The advantage of this apparatus compared with simple apparatuses in which a bag is placed into the container with no retaining devices lies in the fact that when the container is in use, the reinforcement between projection and seal is maintained so that the bag cannot slip into the interior of the container, for instance by violent flow conditions or the like. In order to guarantee a reliable sealing of the apparatus, the seal must, when in the compressed state, still be thicker than the height of the reinforcement. The minimum gap between the projections and the other part of the retaining device ought therefore to be less than the thickness of the reinforcement. So that the bag is not clamped fast by the projection, which could result in punctiform mechanical loadings, and so that the seal can also be pressed sufficient firmly, the said distance ought to be greater than the thickness of the bag wall.

The seals used are normal seals or gaskets adapted to the conditions of the process.

Preferably, the bottom part of the retaining device is an intermediate ring and the upper part of the retaining device is an intermediate ring with a plurality of projections or a bead along the inner opening. If the opening in the container is not circular, then here and hereinafter the term "intermediate ring" must be taken to mean the obvious analogue adapted to the shape of the opening in the container. As a result of this arrangement, the bag can easily be placed into the bottom part of the container.

If it is intended also to mount a screen or grate over the bag, then the simplest way of producing the retaining device is for the bottom part of the retaining device to be an intermediate ring while the upper part of the retaining device is an intermediate ring with a screen mounted on it, the projections being provided on the screen.

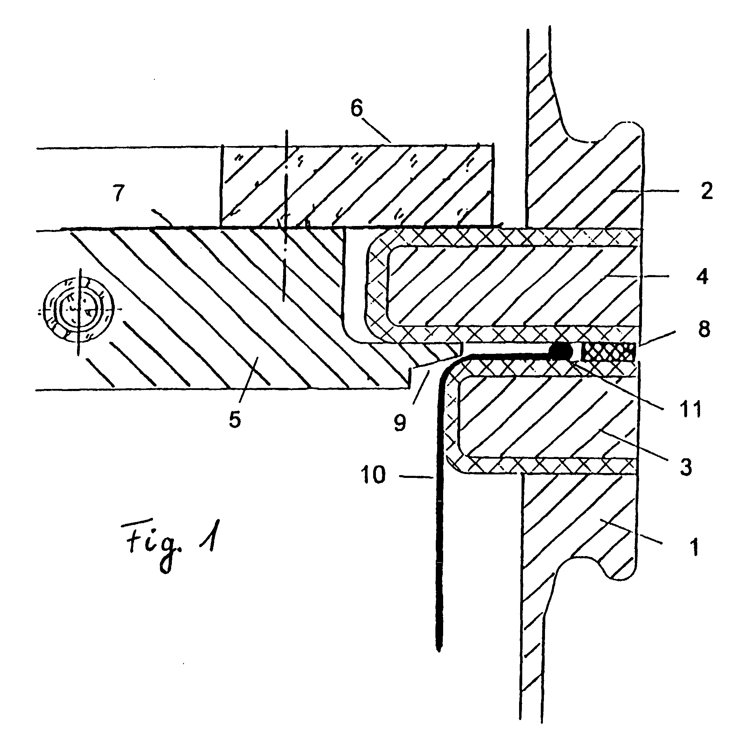

By way of example, a preferred embodiment of the method according to the invention for producing SiO₂ aerogels from water glass by sub-critical drying is described hereinafter with reference to the drawing.

The drawing shows a preferred embodiment of the retaining device for a bag with thickening elements according to the invention.

Relatively large quantities of aerogels were produced by the method according to Example 7 disclosed in DE 196 48 798 A. Three stations are built up. The first station consists of a spray tower in which water glass is sprayed together with the specific quantity of hydrochloric acid. According to the design of the mixing nozzle, so this results in particles of approx. 1 mm diameter which are spherical in shape and which precipitate in a vapour atmosphere. The particles are extracted at the bottom end of the spray tower as an aqueous suspension and are delivered to a filter belt on which they are washed by being rinsed with electrolytic water to remove the salt. The belt throws the aerogel particles directly into the reaction container according to the invention and which is placed beneath it, the said container, once it has been filled, being closed by a lid which can be placed on it. A flexible bag will have been placed previously into the container and the aerogel remains in this.

The bag consists of ECTFE fabric at the bottom and a less permeable PTFE needled felt at the walls and which forms at the opening a tube in which there is a PTFE tube with a core of spring wire which is closed into a ring at its ends by a small tantalum tube.

Placed into a conventionally enamelled steel container bottom part (1) with a discharge union is a screen or grate of glass fibre reinforced PTFE which is electrically conductive to avoid the risk of explosion and which is supported on a total of four parallel webs. An enamelled steel lid (2) with an agitator connection serves as the top part of the container.

A bottom and a top intermediate ring (3, 4) of steel with a PTFE coating are connected in gastight fashion to the container bottom (1) or container top (2) by mushroom head or ordinary screws. The upper intermediate ring (4) also carries an upper supporting grid (5). The supporting grid which consists of PTFE bars is clamped under the intermediate ring by a stiffening ring (6). Between stiffening ring (6) and supporting grid (5) is additionally placed a filter cloth (7) of ECTFE fabric of high permeability (150 µm mesh) which is fixed by means of PTFE screws and washers. Between upper and lower intermediate rings is a seal (8). The bars of the upper supporting grid have projections (9) which project into the sealing gap so that the PTFE wall (10) of the bag and thus the bag is supported between seal (8) and projection (9) by a tube formed from the bag wall and housing the PTFE sheathed spring wire (11), so preventing the bag collapsing. The projections are so chamfered that they offer sufficient clearance for changes in length due to heat expansion.

The reaction container is then moved to the second station where it is connected to the appropriate pipes. Initially, the gel is acidulated at this station in that hydrochloric acid is passed through it. Subsequently, a mixture of hexamethyl disiloxane and trimethyl chlorosilane is pumped through the aerogel whereby on the one hand the surface of the aerogel is rendered water repellent and on the other trimethyl chlorosilane and water react to produce hexamethyl disiloxane (HMDSO) and water. The reaction takes place in forced circulation, the hydrochloric acid arising being decanted off continuously.

In the third and final station to which the container is moved, the water-and HMDSO-moist gel which is still very acid, is sub-critically dried. For this, nitrogen at temperatures around 180°C is passed from the top downwards through the bulk material. The nitrogen is propelled in a cycle, accompanied by the moisture being condensed out.

Afterwards, the container is opened and the bag is as a complete unit lifted out by means of sewn-on handles or tubes. This composite structure can then be stored separately or transported to the customer for further processing.

The mobile container which is enamelled on the inside to make it resistant to corrosion, need not be cleaned, because the bag was placed in it, so that it can be used again immediately for the next batch.

## Claims

1. A method of producing aerogels, **characterised in that**, following gel formation, the lyogel is transferred, for at least two further procedural stages, to a mobile container sealed in a gastight fashion and comprising inlets and outlets and **in that** for these procedural stages, the container is moved to appropriate stations for feeding and discharging substances, at which stations they are connected to feed and discharge means, and **in that** the procedural stages are carried out there.

2. A method according to claim 1, **characterised in that**, at least at those locations at which gases or fluids emerge from the gel during at least one of the process stages, there are means permeable to gases and fluids but not to gels.

3. A method according to claim 1 or 2, **characterised in that** the means permeable to gases and fluids but not to gels is a filter tray.

4. A method according to claim 1 or 2, **characterised in that** the means permeable to gases and fluids but not to gels is a bag.

5. A method according to one of claims 1 to 4, **characterised in that** the flow through the gel in the container is from the top downwards.

6. An apparatus for carrying out the method according to one of the preceding claims, comprising a container with a container upper part (2) and container bottom part (1), an encircling seal (8) and a bag (10, 11) which can be placed into the container, **characterised in that** the bag (10) is at least partially connected to thickening elements (11) along the aperture and **in that** the container upper and bottom parts (2, 1) are, along their periphery, connected in gas-tight fashion to corresponding parts of a retaining device (3, 4, 5, 6, 7, 9) and **in that** the container bottom part (1) can be connected in gastight manner to the bottom part of the retaining device (3), the seal (8) and the container top part (2) can be gas-tightly connected to the upper part of the retaining device (4, 5, 6, 7) and **in that** at least one of the parts of the retaining devices (3, 4, 5, 6, 7) comprises an aperture to receive the bag (10) and at least one of the parts of the retaining device (3, 4, 5, 6,7) contains a plurality of individual projections (9) or an encircling bead so that the minimum distance between the projections (9) for the bead from the other part of the retaining device is greater than the thickness of the thickening elements (11) of the bag (10, 11) and the rim of the bag together with the thickening elements (11) is supported between the projection (9) or bead and the seal (8).

7. An apparatus according to claim 6, **characterised in that** the lower part of the retaining device is an intermediate ring (3) and the upper part of the retaining device is an intermediate ring (4) with a plurality of projections (9) or a bead along the inner aperture.

8. An apparatus according to claim 6, **characterised in that** the lower part of the retaining device is an intermediate ring (3) and the upper part of the retaining device is an intermediate ring (4) with a screen (5, 6) provided on this intermediate ring and **in that** the projections (9) are provided on this screen.

9. An apparatus according to one of claims 6 to 8, **characterised in that** the thickening element (11) is flexible.

10. An apparatus according to one of claims 6 to 9, **characterised in that** the thickening element (11) extends along the entire periphery of the opening.

11. An apparatus according to one of claims 6 to 10, **characterised in that** the thickening element (11) has springing properties.

12. An apparatus according to one of claims 6 to 11, **characterised in that** the thickening element (11) is disposed in a tube formed at the top end of the bag.

13. An apparatus according to one of claims 6 to 12, **characterised in that** the thickening element (11) contains a springing metal wire connected to a ring.

14. An apparatus according to claim 13, **characterised in that** the metal wire is enclosed in a material which is inert in respect of the chemicals used.

## Patentansprüche

1. Verfahren zur Herstellung von Aerogelen, **dadurch gekennzeichnet,**
**daß** das Lyogel nach der Gelbildung für mindestens zwei weitere Verfahrensschritte in einen fahrbaren, luftdicht verschlossenen Behälter überführt wird, der Zuläufe und Abläufe aufweist, und daß für diese Verfahrensschritte der Behälter zur Zu- und Abführung von Stoffen zu entsprechenden Stationen gefahren und dort mit Zu- und Abflußeinrichtungen verbunden wird, und daß die Verfahrensschritte dort durchgeführt werden.

2. Verfahren gemäß Anspruch 1, **dadurch gekennzeichnet, daß** sich in dem Behälter mindestens eine für Gase und Flüssigkeiten, nicht aber für Gele durchlässige Einrichtung mindestens an den Stellen, an denen während mindestens einem der Prozeßschritte Gase oder Flüssigkeiten aus dem Gel austreten, befindet.

3. Verfahren gemäß Anspruch 1 oder 2, **dadurch gekennzeichnet, daß** die für Gase und Flüssigkeiten, nicht aber für Gele durchlässige Einrichtung ein Siebboden ist.

4. Verfahren gemäß Anspruch 1 oder 2, **dadurch gekennzeichnet, daß** die für Gase und Flüssigkeiten, nicht aber für Gele durchlässige Einrichtung ein Sack ist.

5. Verfahren gemäß einem der Ansprüche 1 bis 4, **dadurch gekennzeichnet, daß** das Gel in dem Behälter von oben nach unten durchströmt wird.

6. Vorrichtung zur Durchführung des Verfahrens gemäß einem der vorhergehenden Ansprüche, aufweisend einen Behälter mit Behälteroberteil (2) und Behälterunterteil (1), eine umlaufende Dichtung (8) und einen in den Behälter einlegbaren Sack (10,11), **dadurch gekennzeichnet,**
**daß** der Sack (10) entlang der Öffnung wenigstens teilweise mit verdickenden Elementen (11) verbunden ist,
und **daß** Behälterober- und -unterteil (2,1) entlang ihres Umfangs gasdicht mit entsprechenden Teilen einer Haltevorrichtung (3,4,5,6,7,9) verbunden sind, und daß das Behälterunterteil (1) mit dem unteren Teil der Haltevorrichtung (3), die Dichtung (8) und das Behälteroberteil (2) mit dem oberen Teil der Haltevorrichtung (4,5,6,7) gasdicht verbindbar sind,
und **daß** mindestens einer der Teile der Haltevorrichtungen (3,4,5,6,7) eine Öffnung zur Aufnahme des Sackes (10) und mindestens einer der Teile der Haltevorrichtung (3,4,5,6,7) mehrere einzelne Nasen (9) oder eine umlaufenden Wulst aufweisen, so daß der minimale Abstand der Nasen (9) oder der Wulst von dem anderen Teil der Haltevorrichtung größer als die Dicke der verdickenden Elemente (11) des Sackes (10,11) ist und der Rand des Sackes mit den verdickenden Elementen (11) zwischen der Nase (9) oder Wulst und der Dichtung (8) gehalten wird.

7. Vorrichtung gemäß Anspruch 6, **dadurch gekennzeichnet,**
**daß** der untere Teil der Haltevorrichtung ein Zwischenring (3) und der obere Teil der Haltevorrichtung ein Zwischenring (4) mit mehreren Nasen (9) oder einer Wulst entlang der inneren Öffnung ist.

8. Vorrichtung gemäß Anspruch 6, **dadurch gekennzeichnet,**
**daß** der untere Teil der Haltevorrichtung ein Zwischenring (3) und der obere Teil der Haltevorrichtung ein Zwischenring (4) mit einem an diesem Zwischenring angebrachten Rost (5,6) ist, und daß an diesem Rost die Nasen (9) angebracht sind.

9. Vorrichtung gemäß einem der Ansprüche 6 bis 8, **dadurch gekennzeichnet,**
**daß** das verdickende Element (11) biegsam ist.

10. Vorrichtung gemäß einem der Ansprüche 6 bis 9, **dadurch gekennzeichnet,**
**daß** das verdickende Element (11) sich entlang des ganzen Umfangs der Öffnung erstreckt.

11. Vorrichtung gemäß einem der Ansprüche 6 bis 10, **dadurch gekennzeichnet,**
**daß** das verdickende Element (11) federnd ist.

12. Vorrichtung gemäß einem der Ansprüche 6 bis 11, **dadurch gekennzeichnet,**
**daß** sich die verdickenden Elemente (11) in einem am oberen Ende des Sackes gebildeten Schlauch befindet.

13. Vorrichtung gemäß einem der Ansprüche 6 bis 12, **dadurch gekennzeichnet,**
**daß** das verdickende Element (11) einen zu einem Ring verbundenen, federnden Metalldraht enthält.

14. Vorrichtung gemäß Anspruch 13, **dadurch gekennzeichnet,**
**daß** der Metalldraht von einem gegen die benutzten Chemikalien inerten Material umgeben ist.

## Revendications

1. Procédé de production d'aérogels, **caractérisé en ce que**, après la formation de gel, le lyogel est transféré, pour au moins deux étapes procédurales ultérieures, dans un réservoir mobile scellé de façon étanche aux gaz comprenant des moyens d'entrées et de moyens de sorties et **en ce que**, pour ces étapes procédurales, le réservoir est transporté jusqu'à des postes appropriés de fourniture et d'évacuation de substances, dans ces postes ils sont raccordés à des moyens de fourniture et d'évacuation, et **en ce que** les étapes procédurales y sont effectuées.

2. Procédé selon la revendication 1, **caractérisé en ce que**, au moins aux emplacements auxquels des gaz ou des fluides émergent du gel pendant au moins l'une des étapes du procédé, se trouvent des moyens perméables aux gaz et aux fluides mais pas aux gels.

3. Procédé selon l'une des revendications 1 et 2, **caractérisé en ce que** les moyens perméables aux gaz et aux fluides mais pas aux gels sont un plateau à filtre.

4. Procédé selon l'une des revendications 1 et 2, **caractérisé en ce que** les moyens perméables aux gaz et aux fluides mais pas aux gels sont un sac.

5. Procédé selon l'une des revendications 1 à 4, **caractérisé en ce que** l'écoulement à travers le gel est du haut vers le bas.

6. Dispositif de mise en oeuvre du procédé selon l'une quelconque des revendications précédentes, comprenant un réservoir avec une partie supérieure (2) du réservoir et une partie inférieure (1) du réservoir, un joint circulaire (8) et un sac (10, 11) qui peuvent être placés dans le réservoir, **caractérisé en ce que** le sac (10) est au moins partiellement raccordé à des éléments d'épaississement (11) le long de l'ouverture et **en ce que** les parties supérieure et inférieure du réservoir (2, 1) sont, le long de leur périphérie, raccordées de façon étanche aux gaz aux parties correspondantes d'un dispositif de maintien (3, 4, 5, 6, 7, 9) et **en ce que** la partie inférieure (1) du réservoir peut être raccordée de façon étanche aux gaz à la partie inférieure du dispositif de maintien (3), le joint (8) et la partie supérieure du resérvoir (2) peuvent être raccordés de façon étanche aux gaz à la partie supérieure du dispositif de maintien (4, 5, 6, 7) et **en ce que** au moins l'une des parties du dispositif de maintien (3, 4, 5, 6, 7) comprend une ouverture pour recevoir le sac (10) et au moins l'une des parties du dispositif de maintien (3, 4, 5, 6, 7) contient une pluralité d'appendices individuels (9) ou un bourrelet qui entoure de sorte que la distance minimale entre les appendices (9) pour le bourrelet à partir de l'autre partie du dispositif de maintien est supérieure à l'épaisseur des éléments d'épaississement (11) du sac (10, 11) et le bord du sac conjointement avec les éléments d'épaississement (11) est maintenu entre l'appendice (9) ou le bourrelet et le joint (8).

7. Dispositif selon la revendication 6, **caractérisé en ce que** la partie inférieure du dispositif de maintien est un anneau intermédiaire (3) et la partie supérieure du dispositif de maintien est un anneau intermédiaire (4) avec une pluralité d'appendices (9) ou un bourrelet le long de l'ouvertur intérieure.

8. Dispositif selon la revendication 6, **caractérisé en ce que** la partie inférieure du dispositif de maintien est un anneau intermédiaire (3) et la partie supérieure du dispositif de maintien est un anneau intermédiaire (4) avec un écran (5, 6) prévu sur cet anneau intermédiaire et **en ce que** les appendices (9) sont disposés sur cet écran.

9. Dispositif selon l'une des revendications 6 à 8, **caractérisé en ce que** l'élément d'épaississement (11) est flexible.

10. Dispositif selon l'une des revendications 6 à 9, **caractérisé en ce que** l'élément d'épaississement (11) s'étend sur toute la périphérie de l'ouverture.

11. Dispositif selon l'une des revendications 6 à 10, **caractérisé en ce que** l'élément d'épaississement (11) présente des propriétés élastiques.

12. Dispositif selon l'une des revendications 6 à 11, **caractérisé en ce que** l'élément d'épaississement (11) est disposé dans un tube formé à l'extrémité supérieure du sac.

13. Dispositif selon l'une des revendications 6 à 12, **caractérisé en ce que** l'élément d'épaississement (11) contient un fil d'acier à ressort raccordé à un anneau.

14. Dispositif selon la revendication 13, **caractérisé en ce que** le fil d'acier est enfermé dans un matériau qui est inerte au regard des produits chimiques utilisés.
